Europäisches Patentamt

European Patent Office

Office européen des brevets

(19)

(11) Publication number: **0 113 104**
**B1**

(12) **EUROPEAN PATENT SPECIFICATION**

(45) Date of publication of patent specification: **15.07.87**

(21) Application number: **83112920.0**

(22) Date of filing: **21.12.83**

(51) Int. Cl.⁴: **G 01 M 11/00, G 01 N 21/88**

(54) **Device for detecting fractures in power transmission fibers.**

(30) Priority: **24.12.82 JP 234287/82**
**22.01.83 JP 9055/83**
**13.09.83 JP 169960/83**

(43) Date of publication of application:
**11.07.84 Bulletin 84/28**

(45) Publication of the grant of the patent:
**15.07.87 Bulletin 87/29**

(84) Designated Contracting States:
**DE FR GB SE**

(56) References cited:
**DE-A-2 533 217**
**DE-A-2 739 880**
**FR-A-2 393 287**

**NACHRICHTENTECHNISCHE ZEITSCHRIFT "**
**Ein Rückstreuverfahren zur Untersuchung von**
**Lichtleitfasern", vol. 31, no. 2, February 1978;**
**pages 144-146**

**ETZ, vol. 103, no. 4, 1982; E. MEIER-ENGELEN**
**"Fehlerortung an Lichtwellenleitern"; pages**
**185-191**

(73) Proprietor: **SUMITOMO ELECTRIC INDUSTRIES**
**LIMITED**
**No. 15, Kitahama 5-chome Higashi-ku**
**Osaka-shi Osaka 541 (JP)**

(72) Inventor: **Shinya, Takenaka c/o Osaka Works of**
**Sumitomo**
**Electric Industries, Ltd. 1-3, Shimaya 1-chome**
**Konohana-ku Osaka-shi, Osaka (JP)**
Inventor: **Katsuyoshi, Sunago c/o Osaka Works**
**of Sumitomo**
**Electric Industries, Ltd. 1-3, Shimaya 1-chome**
**Konohana-ku Osaka-shi, Osaka (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

## Description

The present invention relates to a device for detecting a fracture fault in an optical power transmission fiber and is especially useful in laser knives and laser machining devices.

A fracture (crack) in an optical power transmission fiber presents a serious problem in transmitting power through the optical fiber. Various conventional methods are known for detecting fractures in optical fibers. One such method is disclosed in the DE—OS 2533217.

According to this method the time difference is measured between the entry of a light pulse into one end of the fiber to be investigated and the return of the pulse to said end after reflexion at the point of fracture.

This method is, however, not capable of immediately producing a signal when a fiber is actually broken.

The gist of said DE—OS 2533217 document is to locate the place at which the damaging of an optical fiber occurs.

Contrary to this, a device of the above stated type is characterized according to the invention by a plastic fiber laying parallel to and closely adjacent to said power transmission fiber, said plastic fiber having a melting point lower than a temperature generated at a fracture fault within said power transmission fiber, by means for introducing a reference light beam at an input end of said plastic fiber and by means for sensing the presence or absence of said reference light beam at an output end of said plastic fiber.

Preferred embodiments are claimed in the dependent claims. With these features it can be detected if a fracture is present in the power transmission fiber because heat at a high temperature is generated in the area around the fracture side of the fiber and the plastic fiber disposed parallel to the power transmission fiber is melted by the heat in said region. By detecting an amount of reference light beam passing through the plastic fiber, a fracture of the power transmission fiber can, therefore, be detected.

Fig. 1A diagrammatically shows a detection system according to the present invention;

Fig. 1B shows how the system shown in Fig. 1A detects a fracture occurring in a power transmission fiber;

Fig. 2 is a diagram showing a preferred embodiment of a detection system of the present invention;

Fig. 3A diagrammatically shows a portion of the detection system according to the present invention;

Fig. 3B is a diagram showing how the system shown in Fig. 3A detects a fracture occurring in a power transmission fiber;

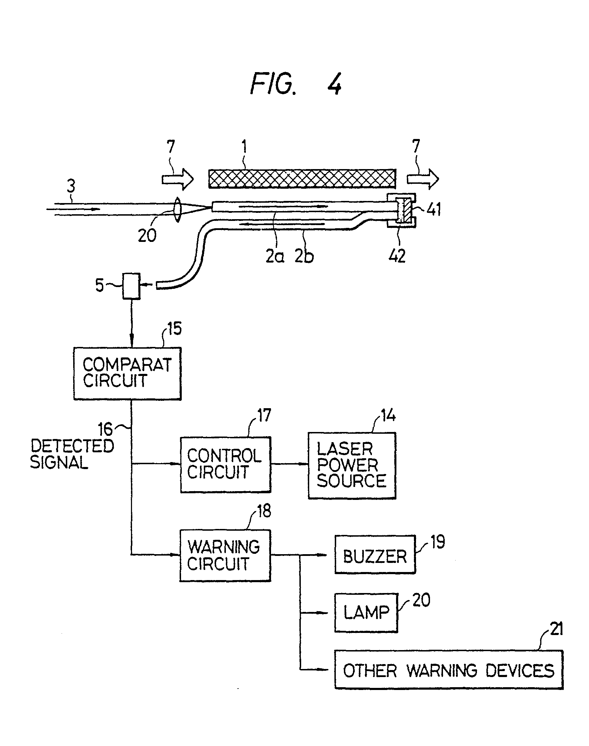

Fig. 4 shows another embodiment of the present invention;

Fig. 5A diagrammatically shows a detection system according to the present invention;

Fig. 5B shows how the system shown in Fig. 5A detects a fracture in a power transmission fiber; and

Fig. 6 shows yet another embodiment of the present invention.

### Description of the Preferred Embodiments

The following are three embodiments according to the present invention.

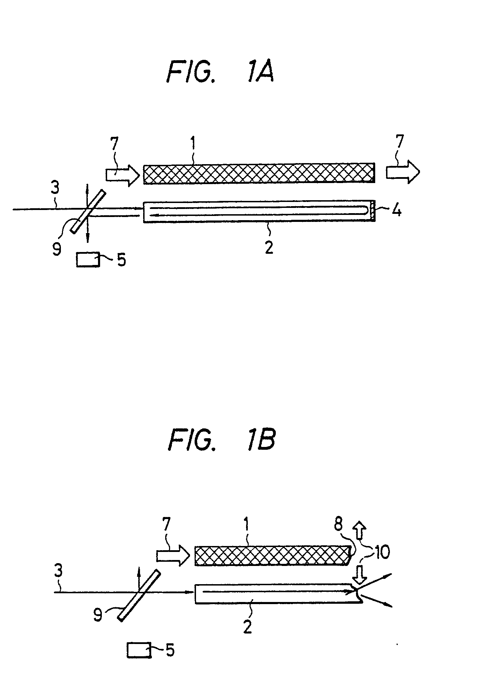

Figs. 1A and 1B show the basic construction of the detecting system of the first embodiment. In Fig. 1A, a power transmission fiber 1 and a plastic fiber 2 are laid side by side. A reference light beam 3 is introduced into the plastic fiber 2. The receiving or terminating end of the plastic fiber is provided with a reflecting coating 4 capable of efficient reflection of light at a wavelength equal to that of the reference light beam. The reference beam, upon being reflected from the terminating end, travels back to the transmitting end where it is branched at a right angle by a half-silvered mirror 9 and received by a photodetector 5. If a fracture is present in the power transmission fiber as shown in Fig. 1B, the area around the fracture site 8 becomes hot, as hot as several hundred degrees Celsius, due to the presence of the fracture. If the plastic fiber has a sufficiently low melting point, for instance, about 100 degrees Celsius, it will melt. As a result, the reference light beam will not be reflected and no light will be received by the detector. Therefore, by sensing the output of the detector, fractures in the power transmission fiber can readily be detected.

Modes for carrying out the present embodiment are as follows:

(1) Any kind of light can be used for the reference light beam, but visible light, such as produced by a He—Ne laser, is convenient and easy to handle. The reasons for this are: i) The spectrum of the beam produced by a $CO_2$ or YAG laser is in the infrared region hence and invisible to the eye. Such a beam need not be supplemented by a visible guide beam for alignment purposes. ii) The visibility of the He—Ne laser light permits easy adjustment and maintenance.

(2) If the reflective coating applied to the terminating end of the plastic fiber is designed to provide a reflectance of 50% and a transmittance of 50%, the light passing through the plastic fiber can be directly used as the guide beam. This presents an advantage in that the plastic fiber and associated components can also be used as part of the power transmission system. However, the reference light reflected by the half-silvered mirror before it enters the plastic fiber is wasted, and the reduced reflectance at the terminating end tends to impair the signal-to-noise ratio.

(3) Instead of applying a reflective coating 4, the terminating end of the plastic fiber may be provided with a mirror 41 that faces the terminating end through a part of matching oil 42 (such as matching oil OF37A produced by Shinetsu Chemical Co. of Japan). This arrangement is somewhat complex, but is easy to fabricate and ensures high reliability.

(4) Aside from a consideration of the absorption of light, the most efficient transmittance of the half-silvered mirror is 50% (i.e. 50% reflectance).

(5) The reference beam can be efficiently introduced into the plastic fiber by means of a lens that focuses the light into a small spot. The transmittance of this lens can be increased to almost 100% by applying a nonreflecting coating 21 to the lens 20. The transmitting end of the plastic fiber may also be provided with a nonreflecting coating 31 that is capable of eliminating the noise component due to reflection from the lens and at the transmitting end.

(6) Many kinds of detector devices and associated circuits can be used. However, the system should be so designed that when a fracture is indicated by a change in the output of the detector, the laser power source is turned off and other necessary actions are taken immediately.

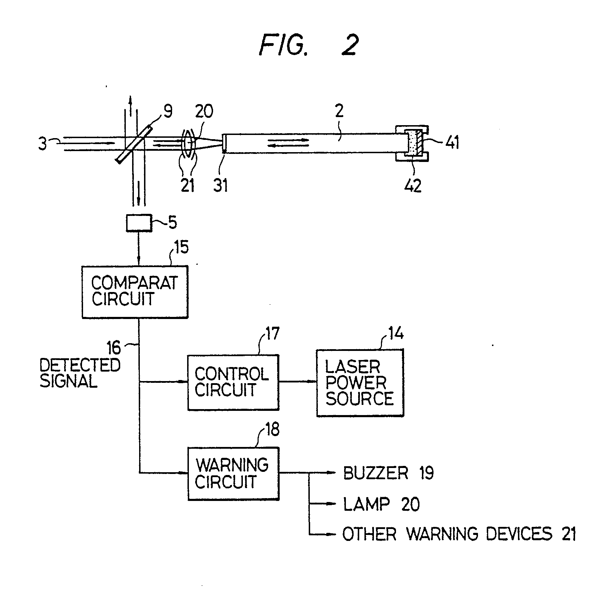

A block diagram of a detection system that embodies all the features described above, except (2), is shown in Fig. 2. A signal received by the detector 5 is fed to a comparator circuit 15. The detected signal 16, the active state of which indicates the occurrence of a fracture, is fed back to the laser power source 14 through a control circuit 18. Also, the signal 16 is supplied to a warning circuit 18 that actuates a buzzer 19, lamp 20 or other suitable warning devices 21.

### Example 2

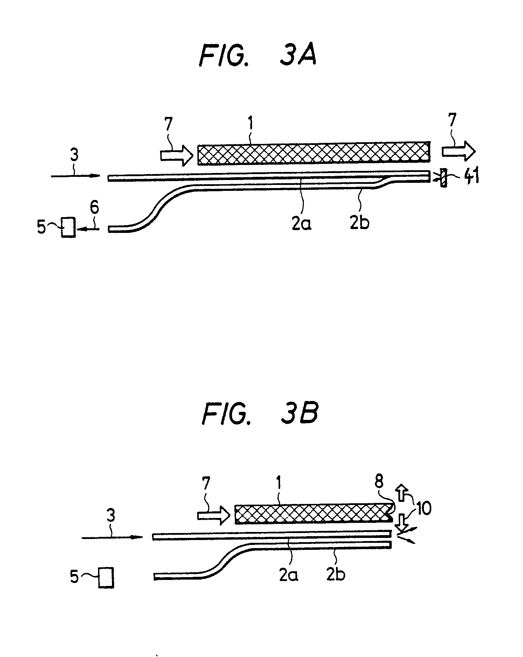

Figs. 3A and 3B show the basic construction of a detecting system of a second embodiment. In Fig. 3A, a fiber 1 transmitting a power beam 3 and two plastic fibers 2a and 2b are laid side by side. A reference beam 3 is introduced into the plastic fiber 2a. The receiving or terminating end of the plastic fiber is provided with a reflecting surface 41 capable of reflecting the reference beam 3. The reflected light 6 passes through the plastic fiber 2b and is received at a detector 5. If a fracture is present in the power transmission fiber, as shown in Fig. 3B, the area around the fracture site 8 becomes hot, as hot as several hundred degrees Celsius. Assuming that the plastic fiber has a low melting point of about 100 degrees Celsius, the fiber will melt. As a result, the reference light beam 3 will not arrive at the end and be reflected and no light will be received by the detector 5. Therefore, by sensing the output of the detector 5, open-circuit failure in the power transmission fiber 2 can be detected.

Each of the two plastic fibers 2a and 2b may be made of a single fiber or a bundle of fibers.

The modes for carrying out this embodiment of the invention are the same as in the embodiment described previously. Also, the detector system is the same.

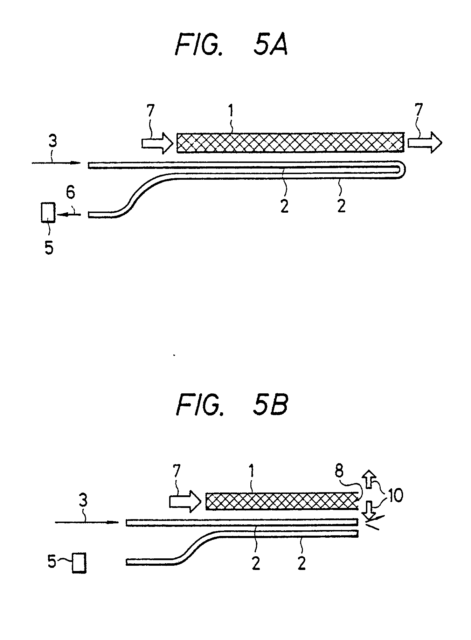

Figs. 5A and 5B show the basic construction of the detection system of a third embodiment. In Fig. 5A, a fiber 1 transmitting a power beam 7 and a plastic fiber 2 folded back at a point close to the receiving end of the power transmission fiber are laid side by side. A reference beam 3 is introduced into one end of the plastic fiber 2. The reflected beam 6 from the folded point of the plastic fiber is received by a photodetector 5. If a fracture occurs in the power transmission fiber shown in Fig. 5B, the area around the site 8 becomes as hot as several hundred degrees Celsius, whereupon the low-melting-point plastic fiber is melted. As a result, the reference light beam is not reflected, and no light is received by the detector 5. Therefore, by sensing the output of the detector 5, the fracture in the power transmission fiber 2 can be detected.

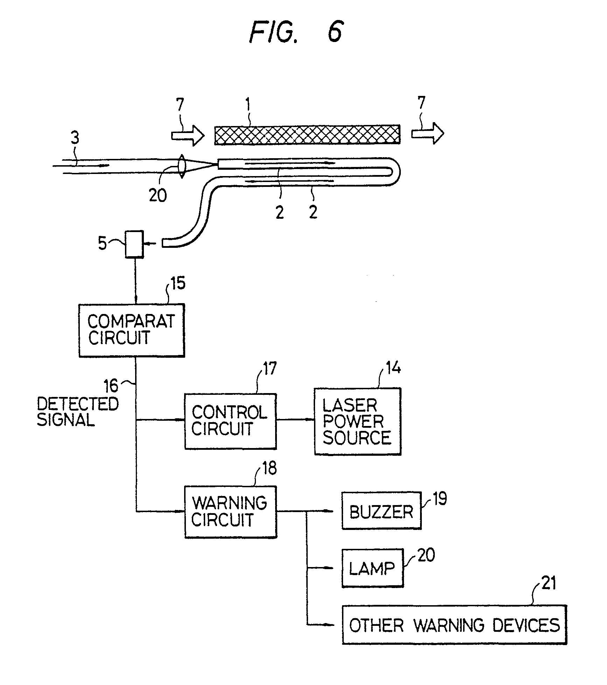

A preferred implementation of this embodiment is shown in Fig. 6. The same modes discussed above are applicable to this embodiment, as well as the same detector system.

According to the present invention, an open-circuit failure in a power transmission fiber is detected by a change in the amount of the light reflected through the plastic fiber. This provides positive protection against hazards resulting from open-circuit failure.

### Claims

1. A device for detecting a fracture fault in an optical power transmission fiber (1), characterized by

a plastic fiber (2) laying parallel and closely adjacent to said power transmission fiber (1), said plastic fiber (2) having a melting point lower than a temperature generated at a fracture fault (8) within said power transmission fiber (1);

by means (20, 21) for introducing a reference light beam (3) at an input end of said plastic fiber (2); and by

means (5, 9) for sensing the presence or absence of said reference light beam (3) at an output end of said plastic fiber (2).

2. The device of claim 1, wherein said plastic fiber (2) comprises first and second portions (2a, 2b) laid parallel to one another along the length of said power transmission fiber (1).

3. The device of claim 2, further comprising means (4, 41) disposed adjacent to an outward end of said power transmission fiber (1) for transferring light between said first and second portions (2a, 2b) of said plastic fiber (2).

4. The device of claim 3, wherein said light transferring means comprises a mirror (41) and a pool of matching oil (42) disposed between said first and second portions (2a, 2b) and said mirror (41).

5. The device of claim 3, wherein said light transferring means comprises a bent segment of said plastic fiber.

6. The device of claim 1, wherein said plastic fiber has a reflecting coating (4) on an end thereof adjacent to an outward end of said power transmission fiber (1).

7. The device according to any one of the foregoing claims, wherein said sensing means comprises a beam splitter (9) disposed in a path of said reference beam (3), and means (5) for producing an electrical signal in response to a return beam reflected by a half-silvered mirror (9).

**Patentansprüche**

1. Vorrichtung zum Feststellen eines Bruchfehlers in einer optische Energie übertragenden Faser (1)
gekennzeichnet durch
eine Kunststoffaser (2), die parallel und unmittelbar benachbart zur Energieübertragungsfaser (1) liegt, wobei die Kunststoffaser (2) einen Schmelzpunkt hat, der unterhalb der Temperatur liegt, die bei einem Bruchfehler (8) in der Energieübertragungsfaser (1) erzeugt wird;
durch eine Einrichtung (20, 21), mit der ein Bezugslichtstrahl (3) über ein Eingangsende der Kunststoffaser (2) in diese eingeleitet werden kann; und durch eine Einrichtung (5, 9) mit der die Anwesenheit oder die Abwesenheit des Bezugslichtstrahls (3) am Ausgangsende der Kunststoffaser (2) festgestellt werden kann.

2. Vorrichtung nach Anspruch 1, wobei die Kunststoffaser einen ersten und einen zweiten Bereich (2a, 2b) aufweist, die über die Länge der Energieübertragungsfaser (1) parallel zueinander liegen.

3. Vorrichtung nach Anspruch 2, wobei die Vorrichtung weiterhin eine Einrichtung (4, 41) umfaßt, die in der Nähe eines Ausgangsendes der Energieübertragungsfaser (1) angeordnet ist, um Licht zwischen dem ersten und zweiten Bereich (2a, 2b) der Kunststoffaser (2) zu übertragen.

4. Vorrichtung nach Anspruch 3, wobei die Licht übertragende Einrichtung einen Spiegel (41) und eine Kammer mit Anpassungsöl (42) aufweist, die zwischen dem ersten und dem zweiten Bereich (2a, 2b) und dem Spiegel (41) angeordnet ist.

5. Vorrichtung nach Anspruch 3, wobei die Licht übertragende Einrichtung ein gebogenes Segment der Kunststoffaser umfaßt.

6. Vorrichtung nach Anspruch 1, wobei die Kunststoffaser eine Reflexionsbeschichtung (4) an einem Ende in der Nähe des Ausgangsendes des Energieübertragungsfaser aufweist.

7. Vorrichtung nach irgendeinem der vorangegangenen Ansprüche, wobei die Nachweiseinrichtung einen Strahlteiler (9) aufweist, der im Strahlengang des Bezugsstrahls (3) angeordnet ist und mit einer Einrichtung (5), die ein elektrisches Signal abhängig von einem Rückkehrstrahl erzeugt, der an einem halbdurchlässigen Spiegel (9) reflektiert wird.

**Revendications**

1. Dispositif destiné à détecter une défaillance du type fracture dans une fibre de transmission d'énergie optique (1), caractérisé par:
une fibre de matière plastique (2) s'étendant parallèlement à ladite fibre de transmission d'énergie (1) et à proximité immédiate de celle-ci, ladite fibre de matière plastique (2) possédant un point de fusion inférieur à la température produite au niveau d'une défaillance du type fracture (8) à l'intérieur de ladite fibre de transmission d'énergie (1);
un moyen (20, 21) servant à introduire un faisceau lumineux de référence (3) à une extrémité d'entrée de ladite fibre de matière plastique (2); et
un moyen (5, 9) servant à détecter la présence ou l'absence dudit faisceau lumineux de référence (3) à une extrémité de sortie de ladite fibre de matière plastique (2).

2. Dispositif selon la revendication 1, où ladite fibre de matière plastique (2) comprend une première et une deuxième partie (2a, 2b) disposées parallèlement l'une à l'autre suivant la longueur de ladite fibre de transmission d'énergie (1).

3. Dispositif selon la revendication 2, comprenant en outre un moyen (4, 41) disposé au voisinage d'une extrémité extérieure de ladite fibre de transmission d'énergie (1) afin de transférer la lumière entre lesdites première et deuxième parties (2a, 2b) de ladite fibre de matière plastique (2).

4. Dispositif selon la revendication 3, où ledit moyen de transfert de lumière comprend un miroir (41) et un bain d'huile d'adaptation (42) disposé entre lesdites première et deuxième parties (2a, 2b) et ledit miroir (41).

5. Dispositif selon la revendication 3, où ledit moyen de transfert de lumière comprend un segment plié de ladite fibre de matière plastique.

6. Dispositif selon la revendication 1, où ladite fibre de matière plastique possède un revêtement réfléchissant (4) sur l'une de ses extrémités voisine d'une extrémité de sortie de ladite fibre de transmission d'énergie (1).

7. Dispositif selon l'une quelconque des revendications précédentes, où ledit moyen de détection comprend un séparateur de faisceau (9) disposé sur le trajet dudit faisceau de référence (3), et un moyen (5) servant à produire un signal électrique en réponse à un faisceau de retour réfléchi par un miroir semi-transparent (9).

# FIG. 1A

# FIG. 1B

## FIG. 2

## FIG. 3A

## FIG. 3B

# FIG. 4

FIG. 5A

FIG. 5B

## FIG. 6

COMPARAT CIRCUIT — 15

16 — DETECTED SIGNAL

CONTROL CIRCUIT — 17

LASER POWER SOURCE — 14

WARNING CIRCUIT — 18

BUZZER — 19

LAMP — 20

OTHER WARNING DEVICES — 21